# EUROPEAN PATENT SPECIFICATION

(11) **EP 2 219 436 B1**
(45) Date of publication and mention of the grant of the patent: **10.05.2017**
(21) Application number: 08829951.6
(22) Date of filing: 01.12.2008
(51) Int. Cl.: A01J 5/01, G01F 1/64, G01F 1/74

(54) **MILK METER HAVING A MEASURING SECTION OF SLOT-SHAPED CROSS SECTION FOR AN IMPEDANCE MEASUREMENT.**
MILCHMESSGERÄT MIT EINEM MESSABSCHNITT MIT SCHLITZFÖRMIGEM QUERSCHNITT FÜR EINE IMPEDANZMESSUNG
COMPTEUR À LAIT ÉQUIPÉ D'UNE SECTION DE MESURE DE SECTION TRANSVERSALE EN FORME DE FENTE POUR UNE MESURE D'IMPÉDANCE

(30) Priority: 30.11.2007 NL 2001042
(43) Date of publication of application: 25.08.2010
(73) Proprietor: N.V. Nederlandsche Apparatenfabriek NEDAP, 7141 DC Groenlo (NL)
(72) Inventor: VAN DIJK, Jeroen Martin, 7543 ER Enschede (NL); VERSTEGE, Albertino Bernardo Maria, NL-7121 HM Aalten (NL); ZENTS, Otto Theodorus Jozef, NL-7131 ES Lichtenvoorde (NL); KLOOSTRA, Sietze, NL-7241 VK Lochem (NL)
(74) Representative: V.O.
(86) International application number: PCT/NL2008/050762
(87) International publication number: WO 2009/070027

(56) References cited:
- EP-A- 0 509 288
- EP-A- 0 536 080
- EP-A- 1 604 566
- US-A- 4 714 048

## Description

The invention relates to a milk meter for obtaining information about the volume of milk provided by a milking machine when milking animals wherein the milk meter comprises at least one measuring section through which, in use, milk to be measured flows.

Such milk meters are known in various types. Many known milk meters are mechanical fill-and-dump meters, which have moving parts. A drawback of such mechanical milk meters is that the moving parts are subject to wear and require maintenance and are further susceptible to contamination. Further, the moving parts can become stuck. As a result of such occurrences, a milk meter may, without this being noticed, provide incorrect measuring results, which is, of course, undesired.

From EP 0 536 080, a milk meter operating in a contactless manner is known, which comprises a measuring section, contains a number of channels with known dimensions, and to which the milk coming from the milking machine is fed. The number and the dimensions of the channels are selected such that during measuring, the channels are not completely filled with milk. Along each channel are arranged in a spaced apart manner a first and a second light source which can provide, for instance, infrared light. At the side of the channel opposite each light source a detector is placed, which can capture the light of the corresponding light source after the light has passed the channel and the milk present therein. With the aid of the detector, the attenuation of the light occurring in the channel can be determined. This attenuation is a measure for the current filling of the channel at the location of the light source. In general, the output signal of the detector is a signal varying over time, representing the course of the level of the milk over time in the respective channel. The detector cooperating with the second light source placed at a distance from the first light source provides a similar signal but shifted over time. The time difference between the two signals is measured, whereupon through the combination with the known distance between the first and second light source, the flow velocity of the milk is obtained.

Then, from the flow velocity and the current filling of the respective channel, with the aid of a microprocessor, the flow rate is determined of the milk flowing through each channel, or through all channels together, respectively. A drawback of the known apparatus is that the light sources and detectors are sensitive to contamination and have characteristics that change through ageing. Further, the measuring section of the known milk meter is rather voluminous as it comprises a large number of side-by-side channels. Such a measuring section may be difficult to place in the milk line system of a milking machine.

EP 1 604 566 discloses a milk meter, according to the preamble of claim 1.

The object of the invention is to provide an alternative type milk meter, which, like the known milk meter, has no moving parts and which further does not comprise light sources and light detectors. More in general, the invention aims to provide a reliable and fast-acting, simple-to-install milk meter with stable properties.

To that end, according to the invention, a milk meter is characterized to that end in that the tubular measuring section is provided with at least one measuring electrode assembly for carrying out an impedance measurement on milk present in the measuring section wherein, at the location of each measuring electrode assembly, the tubular measuring section has an elongated slot-shaped cross section at its inside, with at least two opposite long sides and, optionally, with short sides wherein each long side of two opposite long sides is provided with at least one measuring electrode of the at least one measuring electrode assembly.

As, at the location of each measuring electrode assembly, the measuring section has an elongated slot-shaped cross section, in use, each electrode of the measuring electrode assembly will be at least virtually always in contact with milk when milk flows through the portion of the measuring section where a measuring electrode assembly is present. Owing to this guaranteed contact between the measuring electrode assembly and the milk, it is possible to always carry out a good impedance measurement.

The impedance measured by a measuring electrode assembly is again a measure for the current filling of the measuring section at the location of the measuring electrode assembly. By also determining the time between the moments at which a particular impedance is measured by a first measuring electrode assembly and, thereupon, is measured by a second measuring electrode assembly, and by combining this with a known distance between the two measuring electrode assemblies, a flow velocity of the milk through the measuring section at the location of the measuring electrode assemblies can be determined. By combining this flow velocity and the measured current filling together with known dimensions of the measuring section, the flow rate of the milk can be determined. By integrating the flow rate varying over time in time, the total volume that has flowed through a measuring section is obtained. Upstream of the measuring section, the milk meter can be provided with a slug-former. Preferably, it holds that the long sides of the cross section at the at least one measuring electrode assembly are each of curved design. It is possible that the long sides at the at least one measuring electrode assembly are each curved in the same direction. The long sides at the at least one measuring electrode assembly can each be curved in the same direction. It is also possible that the long sides of the cross section at each measuring electrode assembly are each of curved design.

A slot-shaped cross section at the at least one measuring electrode assembly can form a loop closed upon itself in a longitudinal direction of the cross section so that each long side forms a loop closed upon itself.

In particular it holds that the slot-shaped cross section at the at least one measuring electrode assembly forms a loop closed upon itself in a longitudinal direction of the cross section so that each long side forms a loop closed upon itself.

Furthermore, upstream and downstream, the milk meter can comprise a tubular flow section which has at least partly a round cross section. It may further hold that the slug-former is included between the flow section located upstream of the measuring section and the measuring section.

It is also possible that a flow section and the measuring section are each bounded by a sidewall while these sidewalls merge smoothly with each other. Furthermore it is possible that the flow section located upstream of the measuring section and the slug former are each bounded by a sidewall while these sidewalls merge smoothly with each other.

It can also hold that the surface of a plane part which is bounded by an inside of the flow section upstream of the measuring section, and which plane part forms part of a cross section perpendicular to a flow direction of the flow section, is greater than the surface of a plane part which is bounded by an inside of the measuring section and which plane part forms part of a cross section perpendicular to a flow direction of the measuring section at the location of a measuring electrode assembly and/or that the surface of a plane part which is bounded by an inside of the flow section downstream of the measuring section and which plane part forms part of a cross section perpendicular to a flow direction of the flow section is greater than the surface of a plane part which is bounded by an inside of the measuring section and which plane part forms part of a cross section perpendicular to a flow direction of the measuring section at the location of a measuring electrode assembly.

In particular it holds that the milk meter is further provided with signal processing means for carrying out, per measuring electrode assembly, an impedance measurement on the milk.

Preferably, it further holds that the milk meter is further provided with signal processing means for determining the information mentioned from the measuring signals provided by the measuring electrode assemblies. The signal processing means for carrying out the impedance measurement and the signal processing means for determining the information mentioned can be the same.

According to a preferred embodiment it holds that the signal processing means are designed for carrying out, per measuring electrode assembly, a resistance measurement on milk.

Preferably, it holds here that the milk meter is designed such that in use, a resistance measurement is carried out between at least one first measuring electrode and at least one second measuring electrode of a measuring electrode assembly while the at least one first measuring electrode is provided at one of the long sides of a slot-shaped cross section and the at least one second measuring electrode is provided at another of the long sides of the slot-shaped cross section.

However, it is also possible that at at least one long side, a plurality of measuring electrodes are provided, such that these measuring electrodes are arranged distributed over at least virtually a full length of the respective long side. In particular, it holds here that at each long side, a plurality of measuring electrodes are provided in a manner such that these measuring electrodes are provided per long side distributed over at least virtually a full length of the respective side. Such a milk meter is suitable for carrying out a resistance measurement as well as a capacitance measurement. In case of the resistance measurement, it holds in particular that the milk meter is designed such that, in use, a resistance measurement is carried out between measuring electrodes of pairs of measuring electrodes of a measuring electrode assembly, while each pair comprises a first measuring electrode and a second measuring electrode while the first measuring electrode is provided at one of the long sides of a slot-shaped cross section and the second measuring electrode is provided at another of the long sides of the slot-shaped cross section. In particular, it holds that the signal processing means are designed for carrying out, per measuring electrode assembly, a capacitance measurement on the milk. In particular it holds here that the measuring electrodes are provided for application of an ECT (Electrical Capacitance Tomography) technique while the signal processing means are designed for determining the information mentioned from measuring signals provided by the measuring electrode assemblies.

Preferably it holds that the signal processing means are designed for determining from the measuring signals coming from the at least two measuring electrode assemblies, with the aid of cross correlation techniques, the time τ the milk requires for travelling the distance between the electrode assemblies whereby preferably the signal processing means furthermore are designed for determining, starting from the degree of filling and the time τ, the current volume or mass flow of the milk flowing through the measuring section, and through integration thereof in time the total volume flow of the milk.

Furthermore it can hold that the signal processing means are designed for determining a standardized degree of filling on the basis of the difference between a resistance value in the measuring section filled completely with milk at least at the location of the at least one measuring electrode assembly, or a representative reference resistance value, respectively, and a resistance value measured at any given moment in the measuring section. Particularly, the milk meter is further provided with a bypass line for diverting the reduced pressure, used by the milking machine for supply of milk, separately from the milk to be measured around the measuring section.

Hereby, particularly, it holds that the bypass line has a separate feed through section provided parallel to the measuring section.

Furthermore, the milk meter can be provided with a collecting compartment, in which at least a one guide partition is provided for guiding the milk to be measured to the measuring electrodes of the measuring section.

Particularly it holds that the at least one guide partition decreases in height towards an inside of a circumferential wall of the collecting compartment.

It can also hold that the measuring section is provided with at least two measuring electrode assemblies separated from each other in flow direction.

For each of the exemplary embodiments outlined hereinabove, it preferably holds that the milk meter is provided upstream of the measuring section with a slug-former. An advantage of the use of a slug-former is that also with a low flow rate of the milk measurements can be carried out. The slug-former serves to eliminate uncontrolled air inclusions as much as possible and generates slugs. These are certain amounts of milk which flow through the measuring section in one stream. This is also called a klots in Dutch. This has as an advantage that the measuring section is also filled with milk when the velocity of the milk is relatively low, so that the measuring electrodes are for as much as possible at the same time in contact with the milk. In general it holds that the slug former combats turbulence and enables measuring in a simple manner, independently of the supply, also with a lower flow rate. In a chamber of the slug-former, milk is collected. Only when the chamber is filled, this is drained through a vacuum present downstream of the measuring section. Thus, the advantage mentioned is obtained.

In particular it holds that the cross section at at least one of the measuring electrode assemblies is rectangular, preferably for measuring as many equivalent signals as possible. However, the invention is not limited thereto. It is also possible that the long sides of the cross section at at least one of the measuring electrode assemblies are each of curved design. It is also possible that a slot-shaped cross section at at least one measuring electrode assembly forms a loop closed upon itself in a longitudinal direction of the cross section, so that each long side forms a loop closed upon itself.

Presently, the invention will be elucidated in further detail on the basis of the drawing. In the drawing:
Fig. 1a shows a side view of a first and second embodiment of a milk meter according to the invention;
Fig. 1b shows a cross section of the first embodiment of the milk meter according to Fig. 1a;
Fig. 1c shows a cross section of the second embodiment of the milk meter according to Fig. 1a;
Fig. 1d shows a third embodiment of a milk meter according to Fig. 1a;
Fig. 2a shows a fourth embodiment of a milk meter according to the invention;
Fig. 2b shows a cross section of the milk meter according to Fig. 2a;
Fig. 3a shows a fifth embodiment of a milk meter according to the invention which is provided with a slug-former;
Fig. 3b shows a cross section of the milk meter according to Fig. 3a;
Fig. 4a shows, in transparent view, a sixth embodiment of a milk meter according to the invention;
Fig. 4b shows a cross section of the milk meter according to Fig. 4a;
Fig. 5a shows a seventh and eighth embodiment according to the invention;
Fig. 5b shows a cross section of the seventh embodiment of the milk meter according to Fig. 5a;
Fig. 5c shows a cross section of the eighth embodiment of the milk meter according to Fig. 5a;
Fig. 6 shows a schematic cross section of a ninth embodiment of a milk meter;
Fig. 7 shows a schematic cross section of a tenth embodiment of a milk meter;
Fig. 8 shows, in perspective, a quarter section of an eleventh embodiment of a milk meter according to the invention; and
Fig. 9 shows an exploded drawing in perspective of parts of Fig. 8.

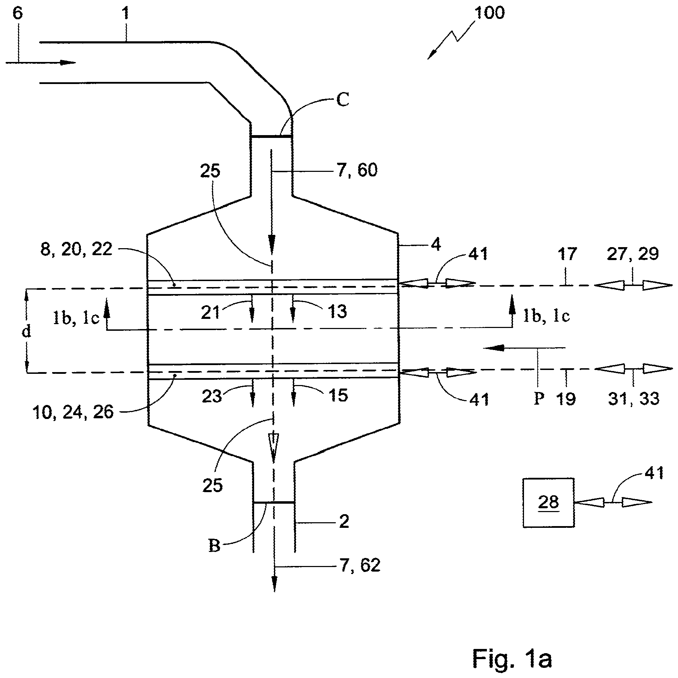

In Fig. 1a, with reference numeral 100, a possible embodiment of a milk meter for obtaining information about the volume of milk provided by a milking machine when milking animals is indicated. The milk meter is provided with a milk supply channel 1 and a milk discharge channel 2. In this example, the milk supply channel and the milk discharge channel each have a circular cross section. The milk meter 100 is further provided with a tubular measuring section 4 through which, in use, the milk 6 to be measured flows. Therefore, the milk is supplied via the milk supply channel 1 to the measuring section 4 and flows from the measuring section via the milk discharge channel 2.

The tubular measuring section 4 is provided with at least two first and second measuring electrode assemblies 8, 10, respectively, separated from each other in the flow direction 7 of the milk meter 100. Flow direction is understood to mean the direction in which the milk flows (in this case, from the milk supply channel 1 to the milk discharge channel 2). These first and second measuring electrode assemblies 8, 10 are designed for carrying out, per measuring electrode assembly, an impedance measurement on the milk present in the measuring section.

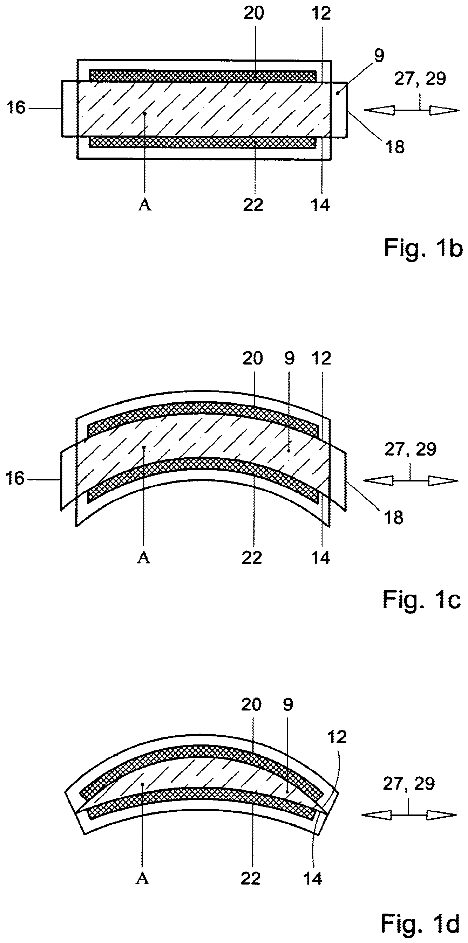

At the location of each measuring electrode assembly 8, 10, the tubular measuring section 4 has an elongated slot-shaped cross section 9, 11 as can be seen well in Fig. 1b for the measuring section at the first measuring electrode assembly 8. In Fig. 1b, the slot-shaped cross section is indicated with reference numeral 9. This elongated slot-shaped cross section 9 has at least two, i.e. is bounded by, two opposite first and second longitudinal sides 12, 14 forming a pair and, in this example, two opposite first and second sides 16, 18, forming a pair. In this example, at the first long side 12, an elongated first measuring electrode 20 is provided such that this measuring electrode extends over at least virtually a full length of the first long side 12. It also holds that at the second long side 14, a second measuring electrode 22 is provided which also extends at least virtually over the full length of the second long side 14. An outside of the first electrode 20 lies flush with an inner wall of the measuring section 4. This also holds for the second measuring electrode 22. Thus, the first and second measuring electrodes 20 and 22 together form the first measuring electrode assembly 8.

In this example, the second measuring electrode assembly 10 has the same configuration as the first measuring electrode assembly 8. As, at the location of each first and second measuring electrode assembly 8, 10, the measuring section 4 has an elongated slot-shaped cross section, it is achieved that when milk flows through the measuring section 4, the first and second measuring electrodes 20 and 22 will always be in contact with the milk. The same holds for the measuring electrodes 24, 26 of the second measuring electrode assembly 10.

As a result, it is possible to carry out an impedance measurement between the first and second measuring electrodes 20 and 22 of the first measuring electrode assembly 8 in a highly proper manner. The same holds for the measuring electrodes of the second measuring electrode assembly 10. In particular, it holds that this impedance measurement is a resistance measurement. As can be seen in the drawing, it holds that a normal 13 of a plane 17 in which lies the cross section 9 comprising at least two opposite long sides 12, 14, includes an angle f different from 90 degrees with a flow direction 21 of the milk through the plane 17. In particular it holds that this angle f is less than 45 degrees, preferably less than 20 degrees and is more preferably at least virtually equal to zero degrees. In this example, the angle f is approximately equal to zero. In this example, it further holds that the direction of the normal 13 and a direction 25 of an axial axis of the tubular measuring section are at least virtually equal to each other. It further holds that the measuring electrode assembly 8 is of an elongated design while a longitudinal direction 27 of the measuring electrode assembly 8 extends in a longitudinal direction 29 of the long sides 12, 14. As is further shown in the drawing, with regard to the second measuring electrode assembly 10 it holds that a normal 15 of a plane 19 in which lies the cross section 11 also comprising at least two opposite long sides 35, 37 (as shown for the long sides 12, 14 in Fig. 1b) includes an angle f different from 90 degrees with a flow direction 23 of the milk through the plane 19. In particular it holds that this angle f is less than 45 degrees, is preferably less than 20 degrees and more preferably is at least virtually equal to zero degrees. In this example, the angle f is approximately equal to zero. It further holds in this example that the direction of the normal 13 and the direction 25 of the axial axis of the tubular measuring section are at least virtually equal to each other. It further holds that the measuring electrode assembly 10 is of elongated design while a longitudinal direction 31 of the measuring electrode assembly 10 extends in a longitudinal direction 33 of the long sides 35, 37. Here, flow direction 21 is understood to mean a vector indicating an average direction of a milk flow in the measuring section at the location of the measuring electrode assembly 8. Here, flow direction 23 is understood to mean a vector indicating an average direction of a milk flow in the measuring section at the location of the measuring electrode assembly 10. This averaging can be carried out in a plane in which a measuring electrode assembly 8, 10 is present.

The milk meter 100 is further provided with signal processing means 28 for carrying out, per measuring electrode assembly, an impedance measurement on the milk. The signal processing means 28 are connected to the measuring electrode assemblies 8, 10 via an electric connection 41. These signal processing means 28 are designed for determining the information mentioned from the measuring signals provided by the measurement electrode assemblies 8, 10. In this example, it holds that the signal processing means 28 are designed for carrying out, per measuring electrode assembly, a resistance measurement on the milk. Therefore, a resistance of the milk is measured between the first and second measuring electrodes 20 and 22. Also, a resistance of the milk is measured between the third and fourth measuring electrodes 24, 26. The first and second measuring electrode 20, 22 are opposite each other so that a distance between the first and second measuring electrode is minimal which renders these measuring electrodes particularly suitable for carrying out a resistance measurement. The same holds for the third and fourth measuring electrodes 24 and 26.

The signal processing means 28 are designed to form, from the measuring signals provided by the measuring electrode assemblies 8, 10, numerical values which represent a degree of filling for the internal tube of the measuring section at the location of the measuring electrode assemblies 8, 10. This can for instance be realized as follows. By observing the measured resistance between the first and second measuring electrodes 20 and 22 for some time, a minimum resistance can be determined. Here, this minimum resistance involves the situation in which the measuring section at the location of the first measuring electrode assembly 8 is completely filled. Naturally, this resistance can also be determined differently. For instance, also a separate measurement can be carried out with which it is ensured that the measuring section 4 is completely filled at the location of the measuring electrode assembly 8. It is also possible to measure the resistance of the milk in a milk space which has the same configuration as the measuring section 4 and which is also provided with a measuring electrode assembly having the same dimensions as the first measuring electrode assembly 8. Thus, with the aid of a separate measurement, the resistance of milk in a filled measuring section can be determined. When this resistance is known, this known value can be supplied as reference resistance value to the signal processing means 28. It is also possible to select, from maximum resistance values measured earlier in the measuring section, a value which is representative of a well-filled measuring section and take this value as reference resistance value. The signal processing means 28 can use this reference value for carrying out further calculations. When, at any moment during measuring, the resistance of the milk flowing through the measuring section between the first and second measuring electrode 20 and 22 is measured and when this is compared to above-mentioned reference resistance value with the measuring section 4 completely filled, from the measured resistance and the reference resistance, information can be derived that is a measure for the degree of filling of the measuring section at the location of the first measuring electrode assembly 8. When further the size of a surface A as indicated in Fig. 1b is known (the surface of a plane part bounded by an inside of the measuring section and which plane part forms part of a cross section perpendicular to a flow direction 21 in the measuring section at the location of the measuring electrode assembly 8), also, the size of the effective surface A' is known which at any given moment is filled with the milk flowing through the measuring section 4 at the location of the first measuring electrode assembly 8. Therefore, the degree of filling can be expressed as a particular percentage of this surface A. Completely analogously, presently, a degree of filling varying over time is measured with the aid of the second measuring electrode assembly 10. The signal processing means are designed for determining how long it takes before a filling degree measured with the aid of the first measuring electrode assembly 8 is measured some time later with the aid of the second measuring electrode assembly 10. This course of time is indicated here with correlation time τ. More in general it holds that with the aid of the first measuring electrode assembly 8 a signal varying over time is generated which represents the measured resistance mentioned. This also holds for the second measuring electrode assembly 10. By correlating the signal generated with the aid of the first measuring electrode assembly 8 with the signal that is generated with the aid of the second measuring electrode assembly 10, the correlation time τ (t) can be determined. If the velocity of the milk varies over time, the correlation time τ (t) will also vary over time. When also a distance d between the first measuring electrode assembly 8 and the second measuring electrode assembly 10 is known, the velocity at which the milk flows through the measuring section can be determined from the formula v(t)=d/τ (t). The flow rate D(t) at the time t at the first measuring electrode assembly 8 now follows from the product of the measured degree of filling V(t), the size of the surface A and the measured velocity v(t). What applies therefore is D(t)=V(t)*A*v(t).

By integrating the flow rate D(t) in time, a total volume of milk flowing through the milk meter can be determined. As stated, all these calculations can be carried out with the aid of the signal processing means 28.

In this example, it holds that the cross section at both measuring electrode assemblies 8, 10 is rectangular. However, it is also possible that a cross section of the measuring section 4 at the first measuring electrode assembly 8 is of curved design as is shown in Fig. 1c. In Fig. 1c, parts corresponding with Fig. 1b are provided with the same reference numerals. The operation of the first measuring electrode assembly 8 according to Fig. 1 is completely analogous to what is described with reference to Fig. 1b. The second measuring electrode assembly 10 can also be designed as represented in Fig. 1c. However, it is also possible that the second measuring electrode assembly 10 has the quality as discussed on the basis of Fig. 1b for the first measuring electrode assembly 8. Such variants are each understood to each fall within the framework of the invention, as defined by the attached claims.

As shown in Fig. 1d, also, slot-shaped cross sections are possible which comprise the two opposite first and second long sides 12, 14, yet comprises no shorts sides. Such variants are also understood to fall within the framework of the invention, as defined by the attached claims. Instead of carrying out a resistance measurement, it is also possible to carry out a capacitance measurement with the aid of the first and second measuring electrode assemblies 8 and 10, respectively. With the aid of the first measuring electrode assembly 8, thus, a capacitance is measured of the milk which is between the first and second measuring electrodes 20 and 22. This capacitance too, completely analogous to what is discussed for the resistance, is a measure for the degree of filling V(t) when also the capacitance between the first and the second measuring electrode 20 and 22 is known with the measuring section 4 completely filled at the location of the first measuring electrode assembly 8. Completely analogously, with the aid of the second measuring electrode assembly 10, through a capacitance measurement, the degree of filling can be determined. When the signals obtained with the aid of the measuring electrode assemblies 8, 10 are combined with each other by means of a capacitance measurement, completely analogously to what is discussed for the resistance measurement, a degree of filling V(t) at the location of the measuring electrode assembly can be determined, a correlation time τ can be determined and, on the basis thereof, a flow rate D(t) as discussed hereinabove.

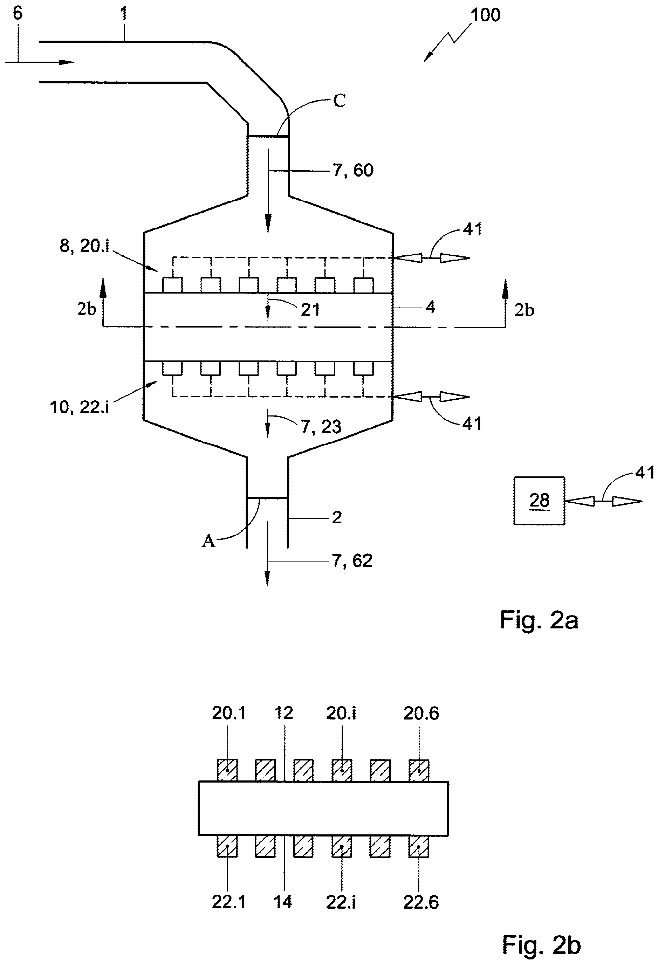

Fig. 2a shows a fourth embodiment of a milk meter according to the invention. Here, parts corresponding to Fig. 1 are provided with the same reference numeral. With the measuring device according to Fig. 2a, 2b, respectively, it holds that at each long side a plurality of measuring electrodes are provided. In this example, for instance, the first long side 12 of the first measuring electrode assembly 8 is equipped with a plurality of, for instance six first measuring electrodes 20.i (i=1, 2, ...6) such that these measuring electrodes are arranged distributed over at least virtually a full length of the respective long side. Completely analogously, at the second long side 14, a plurality of second measuring electrodes 22.j (j=1,2,...6) are provided, in a manner distributed over at least virtually the full length of the second long side 14. In this example, the second measuring electrode assembly 10 is provided with the same configuration of measuring electrodes.

Again, the measuring electrodes of the measuring electrode assembly 8 can be used for a resistance measurement. It is, for instance, possible that in use, a resistance measurement is carried out between at least one first measuring electrode 20.i of the plurality, and one second measuring electrode 22.j of the measuring electrode assembly 8 while the at least one first measuring electrode 20.i is provided at one of the first long sides 12 of the slot-shaped cross section and the at least one second measuring electrode 22.j at a second long side 14 of the slot-shaped cross section. Thus, it is possible that the resistance is measured between, on the one side, all first electrodes 20.i and, on the other side, all second electrodes 22.j. However, it is also possible that the resistance in pairs of electrodes is measured. For instance, the resistance between electrodes lying opposite each other could be measured. The resistance between a first pair of the first and second electrodes 20.1 and 22.1 could for instance be measured. Also, for instance, the resistance can be measured between a second pair of electrodes 20.2 and 22.2. More in general, the resistance can be measured between each pair of opposite first and second electrodes 20.i and 22.i. Hence, the milk meter can be designed such that, in use, a resistance measurement is carried out between measuring electrodes of pairs of measuring electrodes of a measuring electrode assembly while each pair comprises a first measuring electrode 20i and a second measuring electrode 22j, the first measuring electrode 20i being provided at one of the long sides of a slot-shaped cross section and the second measuring electrode 22j at another one of the long sides of the slot-shaped cross section. All these measured resistances can for instance be averaged and, once more, thus form a measure for the degree of filling of the measuring section at the location of the first measuring electrode assembly 8, as discussed hereinabove. A comparable measurement can be carried out with the aid of the second measuring electrode assembly 10, whereupon, as discussed hereinabove, for instance the correlation time τ can be determined for determining the flow rate.

However, it is also possible that with the aid of the first measuring electrode assembly 8 as this is shown in Figs. 2a and 2b, a capacitance measurement on the milk is carried out. This capacitance measurement can be carried out as discussed hereinabove for the resistance measurement. Thus, the capacitance of the milk can be measured between, on the one side, all electrodes 20.i and, on the other side, all electrodes 22.j. However, it is also possible to carry out, each time per pair of electrodes 10.i and 22.i, a capacitance measurement, which capacitance measurements, in turn, can be averaged for obtaining a measure of the degree of filling.

However, with the embodiment of Fig. 2a and 2b, it is also possible that measuring electrodes for use of an ECT (Electrical Capacitance Tomography)-technique are provided wherein the signal processing means 28 are designed for determining the information mentioned from the measuring signals provided by the measuring electrode assemblies. Here, according to a predetermined protocol, the electric capacitance between different pairs and/or sets of pairs of measuring electrodes is measured. The capacitance between two measuring electrodes depends on the material present between the electrodes. The material has a certain permittivity, which is a measure for the difference between the measured capacitance and the capacitance if the material is air. From literature, two methods for capacitance measurement are known. The capacitance measurements between two electrodes can be measured via the AC method and the charge/discharge method. According to the AC method, an alternating current is applied on a measuring electrode (which then functions as control electrode) and then the voltage prevailing on the other electrode (the detector electrode) and phases thereof are measured. From this, the impedance between the two electrodes can be derived. The impedance consists of a resistance and a capacitance parallel to each other. According to the charge/discharge method, in a first phase, the control electrode is charged and in a following phase, the control electrode discharges again. As a result, on the detector electrode, a return signal is produced that can be measured and is a measure for the intermediate capacitance. The AC offers a better signal/interference ratio and is therefore preferred in use. This method can therefore be utilized with the above outlined capacitance measurement. When, on the other hand, an ECT technique is utilized it further holds that the function of control electrode and detector electrode changes during a complete measuring cycle. With electrode 20.1 as control electrode, the other electrodes function as detector electrodes. Then, electrode 20.2 becomes control electrode and the other electrodes function as detector electrodes. When there is a total of N electrodes, the total amount of measurements in a measuring cycle is therefore also N*(N-1)/2 measurements. In this example, it holds that N=12. The capacitance measurements are repeated at a predetermined frequency. On the basis of a thus obtained set of capacitance measurements, with the aid of algorithms know per se for this purpose, such as for instance the LBP (Linear Back Projection)-technique, a current cross sectional image of the measuring section at the location of the first electrode assembly 8 can be reconstructed. This cross sectional image represents the current distribution of dielectric material in the cross sectional plane. In a milk meter, the cross sectional image represents the distribution of milk and air in the measuring section 4 at the location of the cross section. The cross sectional image therefore also gives the current degree of filling of the measuring section with milk at the location of the cross section at the moment of measuring.

For use in a milk meter, it is not necessary to determine a cross sectional image as it is not the three-dimensional distribution of the milk in the measuring section that is of interest, but only the amount of milk at a particular time in the measuring section. Therefore, it is preferred that the obtained collection of measuring values is first normalized with respect to the values measured with a full measuring section and an empty measuring section according to the normalization formula: (C_{measured} - C_{empty}) / C_{full} - C_{empty}), wherein C is the capacitance. This set of measuring values too can be translated with existing techniques such as linear back projection (LBP) to a 'normalized' cross sectional picture of, for instance, 32 x 32 pixels. In each pixel, a measure of the amount of material is present at that location. However, it is preferred that just measuring values are added up and divided by the number of measuring values. As a result, an end value between 0 and 1 is formed which is a measure for the filling of the sensor. Starting from the dimensions of the measuring section and the obtained end value, the degree of filling at any measuring moment can be calculated. When thus, with the aid of the first measuring electrode assembly 8 and the second measuring electrode assembly 10 the degree of filling changing over time is determined, in turn, with the aid of a correlation between these degrees of filling, the correlation (τ), i.e. the course of the correlation time τ (t) over time t is known, also the current velocity of the milk through the measuring section v(t) can be determined. Once more, it holds for the flow rate the Dt)=V(t)*v(t)*A.

In Fig. 2b, it is shown that the measuring section at the first measuring electrode assembly 8 has a rectangular cross section. However, other cross sections of a kind as discussed on the basis of Fig. 1a are possible too. This also holds for the cross section of the measuring section at the second measuring electrode assembly 10.

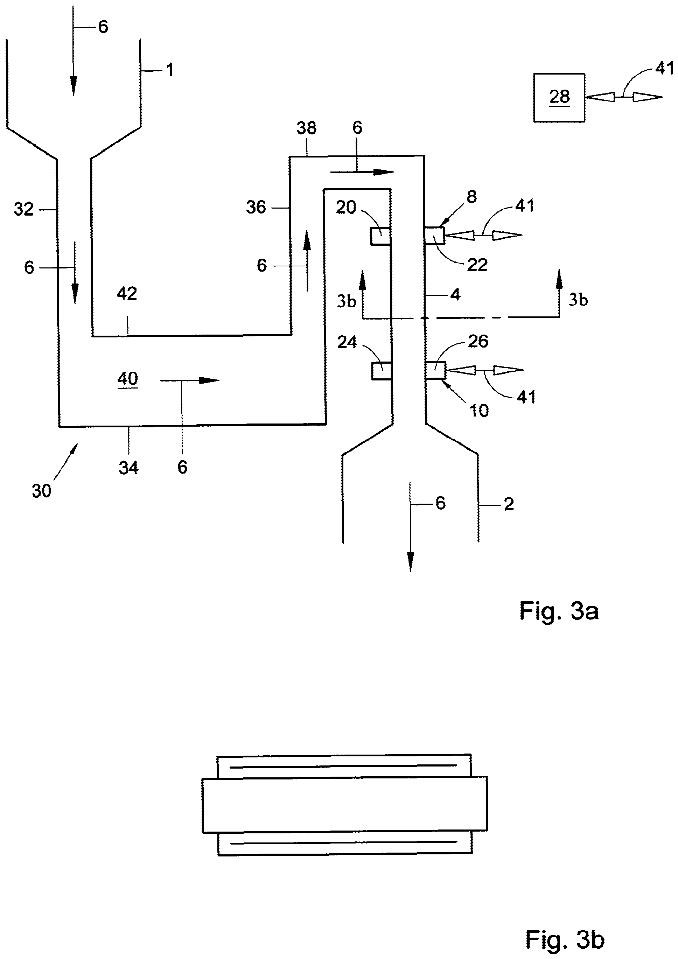

In Fig. 3a, a fifth embodiment of a milk meter according to the invention is shown in which parts corresponding with Figs. 1a-d and 2a-b are provided with the same reference numerals. Here, the measuring section 4 is shown from a side in the direction of the arrow P of Fig. 1a. Here, the first measuring electrode assembly 8 comprises two measuring electrodes 20, 22. The second measuring electrode assembly 10 comprises the two measuring electrodes 24, 26. In this example, with the aid of the signal processing means 28 with the aid of the first measuring electrode assembly 8 and with the aid of the second measuring electrode assembly 10 is carried out a resistance measurement as is discussed on the basis of Figs. 1a-d. However, it holds that the milk meter according to Fig. 3a and 3b is provided upstream of the measuring section 4 with a slug-former 30. The milk supply channel 1 has a circular cross section. However, a cross section of the slug former perpendicular to the milk flow direction 6 is of rectangular design at the points 32 - 38. The slug-former is designed for concentrating an amount of milk to be measured and for generating slugs. The slug-former comprises a chamber 40 which will be gradually filled with milk. When the chamber is full and therefore, the milk has reached an upper side 42 of the chamber, the milk will be drawn in one go from the chamber in the direction of the measuring section 4 because in a manner known per se, the milk discharge channel 2 is drawn vacuum. It is thus effected that also when the size of the milk flow direction 6 in the milk supply channel 1 is relatively small, the measuring section 4 is at least virtually completely filled when milk flows through this measuring section. The slug-formed can also be designed as a part of the milk meter.

In this example, it holds that there is a gradual transition between an inner wall of the milk supply channel 1 and an inner wall of the slug-former 30.

Completely analogously, it holds that an inner wall of the measuring section 4 gradually merges with an inner wall of the milk discharge channel 2 which also has a circular cross section. Here, the slug-former 30 is included in a flow section formed between the upstream located milk supply channel 1 and the downstream located measuring section 4. It therefore holds that the flow section and the measuring section 4 are each bounded by a sidewall, while these side walls merge smoothly with each other.

It also holds that upstream and downstream, the milk meter according to Fig. 1a comprises a tubular flow section which, in this example, is formed by the milk supply channel and the milk discharge channel 2, respectively, while it further holds that in this example, each flow section and the measuring section are each bounded by a sidewall while these sidewalls merge smoothly with each other.

Something similar also holds for the embodiment according to Fig. 2.

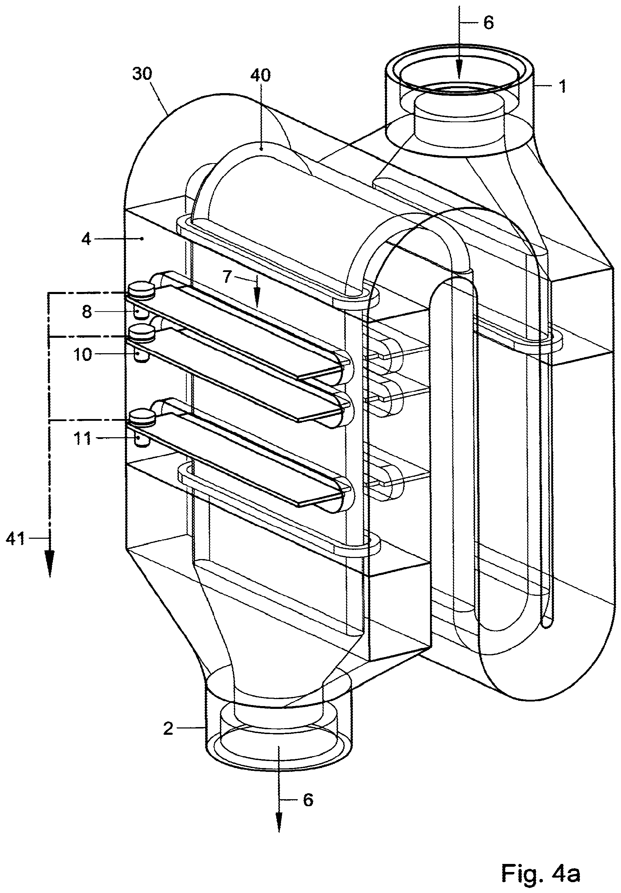

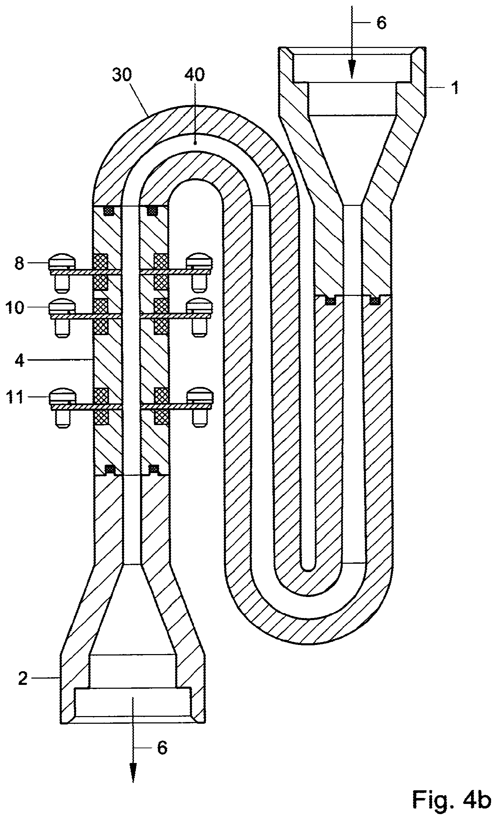

In Fig. 4a and 4b, a sixth embodiment of a milk meter according to the invention is shown which functionally corresponds to the milk meter according to Fig. 3a and 3b, however, is represented according to a more practical elaboration. However, in this example, the milk meter is provided with three measuring electrode assemblies 8, 10, 11. This entails that the flow rate can be determined with the aid of the first and second measuring electrode assembly 8, 10, can be determined with the aid of the first and third measuring electrode assembly 8, 11, and can be determined with the aid of the second and third measuring electrode assembly 10, 11. Thus, one flow rate can be measured three times so that a measuring accuracy can be further enhanced for instance by averaging these three measured flow rates with each other. In the example of Fig. 1, 2, 3 and 4 it further holds that the surface of a plane part C bounded by an inside of the flow section (milk supply channel 1 in this example) upstream of the measuring section, and which plane part forms part of a cross section perpendicular to a flow direction 60 of the flow section is greater at the location of the plane part than the surface of a plane part A which is bounded by an inside of the measuring section and which plane part forms part of a cross section perpendicular to a flow direction 21, 23 of the measuring section at the location of a measuring electrode assembly 8, 10 and that the surface of a plane part B which is bounded by an inside of the flow section downstream of the measuring section and which plane part forms part of a cross section perpendicular to a flow direction 62 of the flow section is greater than the surface of a plane part A which is bounded by an inside of the measuring section and which plane part forms part of a cross section perpendicular to a flow direction 21, 23 of the measuring section at the location of a measuring electrode assembly 8, 10.

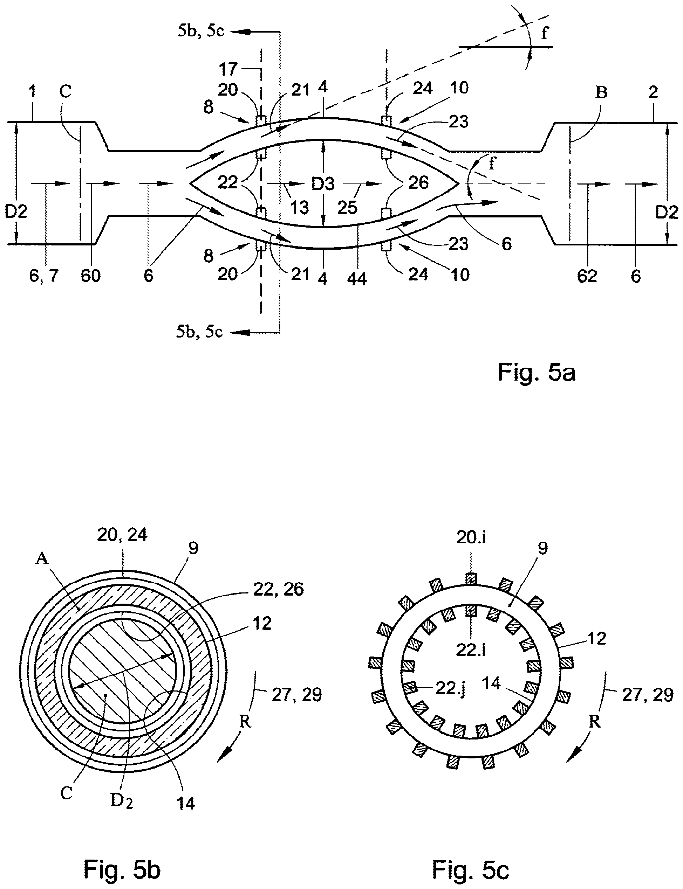

In Fig. 5a, parts corresponding to previous Figures are provided with the same reference numerals. In the example of Fig. 5a, it holds that a slot-shaped cross section at the first measuring electrode assembly 8, which cross section is shown in Fig. 5b in hatchings, forms a loop closed upon itself in a longitudinal direction R of the cross section so that each first and second long side 12, 14 forms a loop closed upon itself. What it amounts to, in fact, as can be clearly seen in Fig. 5a, is that the measuring section 4 comprises a greater diameter D3 than the diameter D2 of the milk supply channel 1 and the milk discharge channel 2, however, in the measuring section, a body 44 is included having the shape of a rugby ball so that this continuous slot-shaped cross section forms a loop closed upon itself in longitudinal direction of the cross section. Completely analogously, the measuring section 4 comprises, at the second measuring electrode assembly 10, a slot-shaped cross section wherein this slot-shaped cross section forms a loop closed upon itself in a longitudinal direction of the cross section so that each long side of this cross section forms a loop closed upon itself. In this example it holds, according to a seventh embodiment, as becomes clear on the basis of Fig. 5b, that the first measuring electrode assembly 8 is provided with a first measuring electrode 20 and a second measuring electrode 22. The first measuring electrode 20 forms a metal ring. This also holds for the second measuring electrode 22. Again, for instance a resistance or a capacitance measurement can be carried out between the first and second measuring electrodes 20 and 22 as discussed hereinabove.

However, it is also possible, as shown in Fig. 5c, that the first measuring electrode assembly 8 is provided with a plurality of first measuring electrodes 20.i and a plurality of second measuring electrodes 22.j. The first measuring electrodes 20.i are, once more, arranged distributed along the first long side 12 while the second measuring electrodes 22.j are arranged distributed along the second long side 14 of the slot-shaped cross section. As can be seen, it holds for the variant according to Fig. 5a, 5b and according to the variant according to Fig. 5a, 5c that a normal 13 of a plane 17 in which lies the cross section 9 comprising the at least two opposite longs ides 12, 14, includes an angle f different from 90 degrees with a flow direction 21 of the milk through the plane 17. In this example, the flow direction 21 varies in radial direction as can be seen in Fig. 5a. In particular, it holds that this angle f is less than 45 degrees, preferably less than 25 degrees and more preferably, is at least virtually equal to zero degrees. In this example, the angle f for each flow direction is approximately equal to 22 degrees. In this example, it further holds that the direction of the normal 13 and a direction 25 of an axial axis of the tubular measuring section are at least virtually equal to each other. It further holds that the measuring electrode assembly 8 is of elongated design while a longitudinal direction 27 of this measuring electrode assembly 8 extends in a longitudinal direction 29 of the long sides 12, 14.

With respect to the second measuring electrode assembly 10, it further holds that a normal 15 of a plane 19 in which lies the cross section 11 comprising at least two opposite long sides 35, 37 (as shown for the long sides 12, 14 in Fig. 5b and 5c), includes an angle f different from 90 degrees with a flow direction 23 of the milk through the plane 19. In this example, the flow direction 23 varies in radial direction as can be seen in Fig. 5a. It holds in particular that the angle f is less than 45 degrees, is preferably less than 25 degrees and is more preferably at least virtually equal to zero degrees. In this example, the angle f for each flow direction is approximately equal to 22 degrees. It further holds that the measuring electrode assembly 10 is of elongated design while a longitudinal direction 27 of the measuring electrode assembly 10 extends in a longitudinal direction 29 of the long sides 35, 37 (as shown in Fig. 5b and Fig. 5c with respect to the measuring electrode assembly 8).

In the example of Fig. 5 it preferably holds that the surface of a plane part C (shown in hatchings in Fig. 5b) which is bounded by an inside of the flow section (in this example milk supply channel 1) upstream of the measuring section, and which plane part forms part of a cross section perpendicular to a flow direction 60 of the flow section is greater at the location of the plane part than the surface of a plane part A (shown in hatchings in Fig. 5b) which is bounded by an inside of the measuring section and which plane part forms part of a cross section perpendicular to a flow direction 21, 23 of the measuring section at the location of a measuring electrode assembly 8, 10. It further holds that the surface of a plane part B which is bounded by an inside of the flow section (in this example milk discharge channel 2) downstream of the measuring section, and which plane part forms part of a cross section perpendicular to a flow direction 62 of the flow section is greater than the surface of a plane part A which is bounded by an inside of the measuring section and which plane part forms part of a cross section perpendicular to a flow direction 21, 23 of the measuring section at the location of a measuring electrode assembly 8, 10.

With the aid of the first and second measuring electrodes 20.i and 22.j, again, resistance and capacitance measurements can be carried out as described hereinabove. For instance, a resistance of the milk can be measured between, on the one side, all first measuring electrodes 20.i and, on the other side, all second measuring electrodes 22.j. However, it is also possible that resistance between pairs of opposite first and second measuring electrodes 20.i and 22.i are measured. It is also possible to carry out a capacitance measurement of the milk between, on the one side, all first electrodes 20.i and, on the other side, all second electrodes 22.j. It is also possible, once again, to carry out capacitance measurements between pairs of opposite first and second measuring electrodes 20.i, 22.i. In addition, with the aid of the electrodes 20.i and 22.j, an ECT measurement can be carried out as described hereinabove. Such variants are each understood to fall within the framework of the invention, as defined by the attached claims.

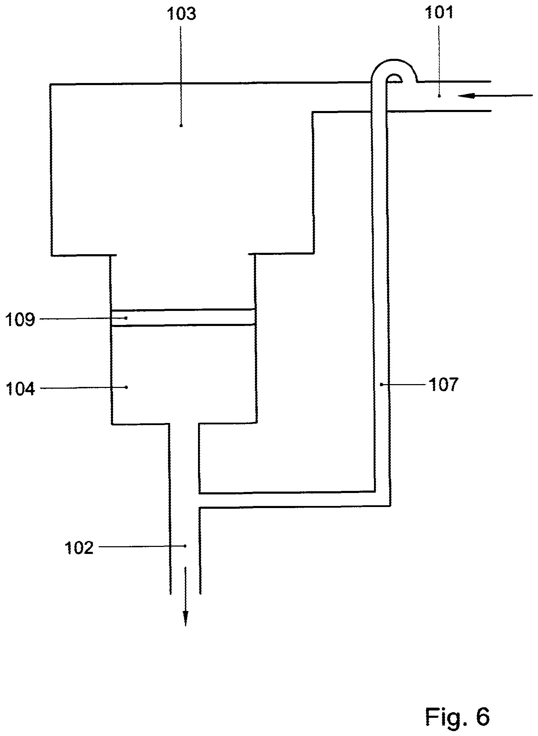

Fig. 6 schematically shows an embodiment of a milk meter, wherein the vacuum is diverted around the measuring section. It can thus be provided that the milk flows more calmly through the measuring section. Owing to this feature, external conditions such as different reduced pressures and longer or shorter lines between the milking claw and the milk meter are of less influence to the measurement. Such vacuum bypasses are not unknown per se, but differ in the manner in which they prevent the milk from entering in the bypass. The milk meter in Fig. 6 is provided with a collecting or receiving compartment 103, to which a measuring section 104 is connected, which is equipped with measuring electrodes 109. The milk to be measured is supplied via the milk supply channel 101 and leaves the milk meter via the milk discharge channel 102. The vacuum used for the milk supply is guided via a bypass line 107 around the measuring section 104.

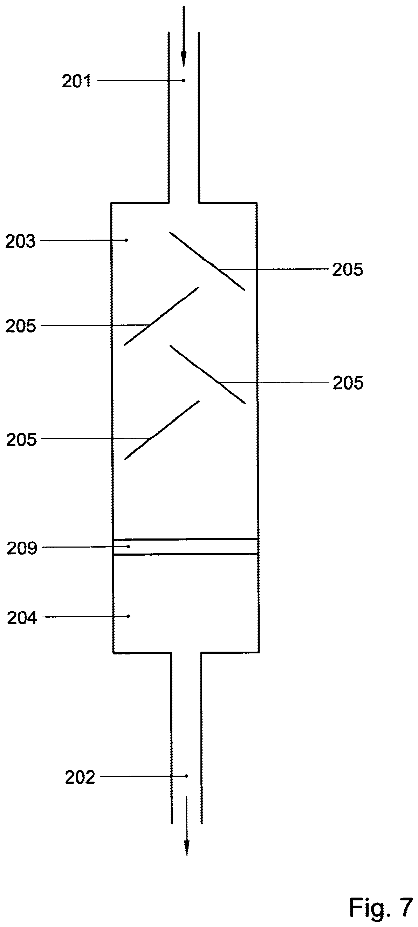

Fig. 7 shows a tenth embodiment of the milk meter according to the invention, with an alternative possibility for solving the problem of a low flow rate. As discussed hereinabove, with a low flow rate, or through-flow, the problem of both measuring electrode assemblies not always being in contact with the milk presents itself. As a result, it may happen that at a particular moment, nothing is measured. In order to ensure that the milk is in contact with both measuring electrode assemblies, also in case of a low flow rate, a flow conditioning is used guiding the milk to the outsides as much as possible. As a result, the milk is not distributed over the entire measuring section but will end up only in a portion of the measuring section. As a result, the chance of the milk touching both measuring electrode assemblies increases because the milk is now spread over a smaller area. The milk meter from Fig. 7 is provided with a milk supply channel 201 which ends up in a collecting or distributing compartment 203. In the distributing compartment 203, guiding partitions 205 are provided for guiding the milk to the outer walls. To that end, a relatively narrow slot is formed between the guiding partitions 205 and the circumferential wall of the collecting compartment 203. In the central part of the collecting compartment 203, the guiding partitions 205 can optionally be mutually connected. From the distribution compartment the milk reaches the measuring section 204, where the measuring electrodes 209 detect the volume and/or the mass of the passing milk. The milk then leaves the milk meter via the milk discharge channel 202.

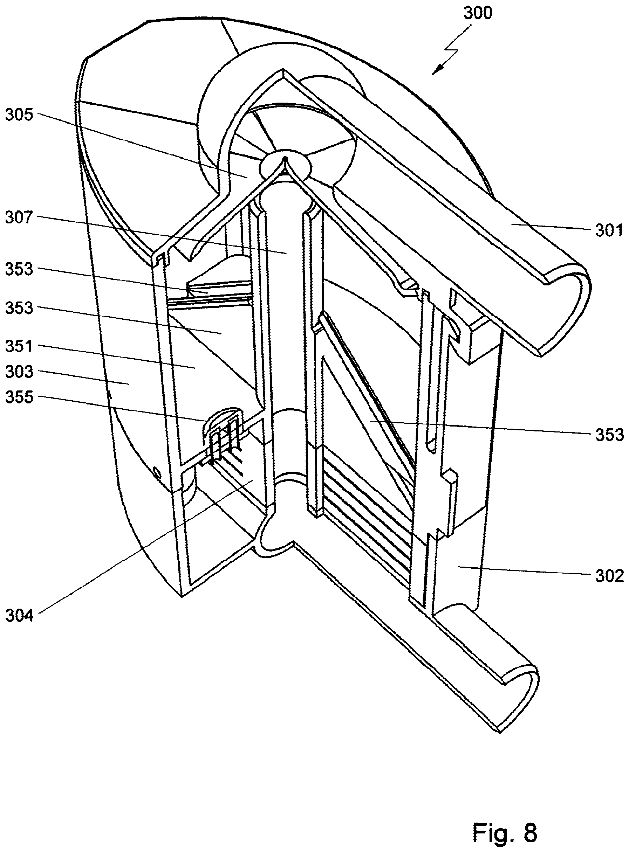

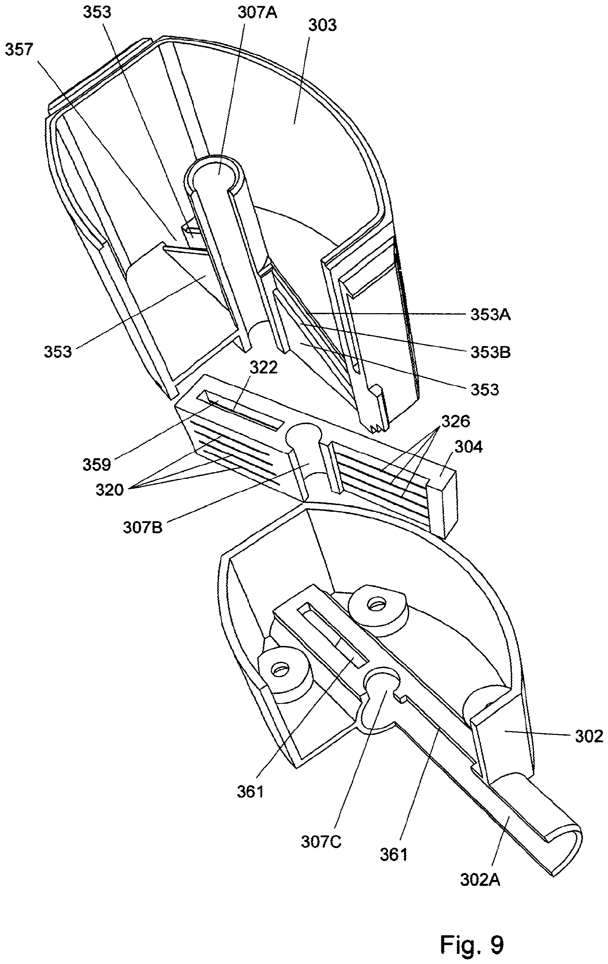

Fig. 8 shows in a quarter section a specific embodiment of a milk meter according to the invention, where not only the vacuum is diverted around the measuring section, but where also, the milk is guided towards the outsides as much as possible. The milk meter 300 in Fig. 8 is built up from a collecting compartment 303 and a measuring section 304, which are connected to each other through a bottom cover 302. The collecting compartment 303 is closed off at the top by a removable inlet lid 301 which is provided at the inside facing the collecting compartment with a milk spreader 305. The collecting compartment 303 has an internal collecting compartment in which vertical partitions 353 rise up from the bottom 352. The partitions 353 run two by two, parallel to each other and decrease in height towards the circumferential wall of the collecting compartment 303. As a result, milk collecting in the collecting compartment 303 will initially flow over a top edge 353A of the partitions 303 close to the circumferential wall. Between two parallel partitions 353, a passage to the measuring section 304 is formed. At the inside of the partitions 353, a further guiding edge 353B is integrally formed. The guiding edge 353B ensures that also a limited amount of liquid flowing over the top edge 353A will first be guided back towards the circumferential wall. In the collecting compartment 303, also, a separate measuring electrode 355 can be provided for determining the resistance of the milk as reference resistance value for the measurement to be carried out in the measuring section. This reference value can be supplied, as described hereinabove, to the signal processing means. Fig. 9 shows in an exploded view, also in quarter section, the collecting compartment 303, the measuring section 304 and bottom cover 302 in their mutual connection. For the sake of clarity, in Fig. 9, the measuring section 304 is drawn in a somewhat deflected position to allow a clear view of the remaining parts as well. In Fig. 9, its can also be seen how a passage 357 is formed between two parallel partitions 353, which passage aligns with a slot 359 of the measuring section 304. In turn, the slot 359 of the measuring sections 304 aligns with a window 361, provided in the bottom cover 302 and which is in communication with the milk discharge channel 302A, which is present therein. The measuring section 304 is equipped at the opposite sides of the slot 359 with a measuring electrode assembly, such as first and second measuring electrodes 320, 322 and/or third and fourth measuring electrodes 326. Fig. 9 further shows how aligning feed-through sections 307A, 307B and 307C together form the bypass line 307.

The signal processing means for processing the measuring signals can be in physical electric connection with the measuring electrode assemblies as well as be part of a wireless communication network. Such networks can also be provided with an Analogue/Digital converter and/or a microprocessor.

The milk meter can simply be of auto-calibrating design. By registering the maximum and minimum signal values with at least some regularity, the filling degrees "full" and "empty" can be adjusted, if required. With such an automatic calibration, in particular, changing conductivity of the milk flowing through the meter can be met so that always a correct degree of filling can be measured. The conductivity of the milk can also be determined separately and, with the thus obtained results, where necessary, the measured filling degree values can be corrected. For instance in Fig. 1a, the normals 13, 15 can each have a different direction. The normals can include an angle of, for instance, 10, 15, 20 or 25 degrees with the directions 21, 23, respectively. This also holds for the other embodiments. Such variants are each understood to fall within the framework of the invention, as defined by the attached claims.

## Claims

1. A milk meter (100) for obtaining information about the volume and/or mass of milk provided by a milking machine when milking animals wherein the milk meter comprises at least one tubular measuring section (4) through which, in use, milk to be measured flows, wherein the tubular measuring section is provided with at least one measuring electrode assembly (8, 10) for carrying out, per measuring electrode assembly, an impedance measurement on milk present in the measuring section, **characterized in that** the tubular measuring section at its inside at the location of the at least one measuring electrode assembly has an elongated slot-shaped cross section (9, 11) with at least two opposite long sides (12, 14) and, optionally, with short sides (16, 18), wherein each long side of two opposite long sides is provided with at least one measuring electrode of the at least one measuring electrode assembly.

2. A milk meter according to claim 1, **characterized in that** a normal of a plane in which lies the cross section comprising the at least two opposite long sides includes an angle different from 90 degrees with a flow direction of the milk through the plane.

3. A milk meter according to claim 2, **characterized in that** the said angle is less than 45 degrees, is preferably less than 25 degrees and is more preferably at least virtually equal to zero degrees.

4. A milk meter according to claim 2 or 3, **characterized in that** the direction of the normal and a direction of an axial axis of the tubular measuring section are at least virtually equal to each other.

5. A milk meter according to any one of the preceding claims, **characterized in that** the at least one measuring electrode assembly is of elongated design wherein a longitudinal direction of the at least one measuring electrode assembly extends in a longitudinal direction of the long sides.

6. A milk meter according to any one of the preceding claims, **characterized in that** at at least one long side a measuring electrode is provided in a manner such that this measuring electrode extends over at least virtually a full length of the respective long side.

7. A milk meter according to claim 6, **characterized in that** at each long side, a measuring electrode is provided which extends over at least virtually a full length of the respective long side.

8. A milk meter according to claim 6 or 7, **characterized in that** at at least one long side a plurality of measuring electrodes are provided such that these measuring electrodes are arranged distributed over at least virtually a full length of the respective long side.

9. A milk meter according to claim 8, **characterized in that** at each long side, a plurality of measuring electrodes are arranged in a manner such that per long side, these measuring electrodes are arranged distributed over at least virtually a full length of the respective long side.

10. A milk meter according to any one of the preceding claims, **characterized in that** upstream of the measuring section the milk meter is provided with a slug-former.

11. A milk meter according to claim 10, **characterized in that** the slug-former is designed for equalizing velocity variations of the milk and for generating slugs.

12. A milk meter according to any one of the preceding claims, **characterized in that** the cross section at the at least one measuring electrode assembly is rectangular.

13. A milk meter according to any one of the preceding claims, **characterized in that** the cross section at each measuring electrode assembly is rectangular.

14. A milk meter according to any one of the preceding claims, **characterized in that** the tubular measuring section is provided with at least two measuring electrode assemblies separated in flow direction, for carrying out, per measuring electrode assembly, an impedance measurement on milk present in the measuring section.

15. A milk meter according to any one of the preceding claims, **characterized in that** the milk meter is further provided with signal processing means for carrying out, per measuring electrode assembly, an impedance measurement on the milk.

16. A milk meter according to any one of the preceding claims, **characterized in that** the milk meter is further provided with signal processing means for determining said information from the measuring signals provided by the at least one measuring electrode assembly.

17. A milk meter according to claim 16, **characterized in that** the signal processing means are designed for carrying out, per measuring electrode assembly, a resistance measurement on the milk.

18. A milk meter according to claim 17, **characterized in that** the milk meter is designed such that, in use, a resistance measurement is carried out between at least one first measuring electrode and at least one second measuring electrode of a measuring electrode assembly, wherein the at least one first measuring electrode is provided at one of the long sides of a slot-shaped cross section and the at least one second measuring electrode is provided at another of the long sides of the slot-shaped cross section.

19. A milk meter according to claim 17 or 18, **characterized in that** the milk meter is designed such that, in use, a resistance measurement is carried out between measuring electrodes of pairs of measuring electrodes of a measuring electrode assembly wherein each pair comprises a first measuring electrode and a second measuring electrode, wherein the first measuring electrode is provided at one of the long sides of a slot-shaped cross section and the second measuring electrode is provided at another of the long sides of the slot-shaped cross section.

20. A milk meter according to claim 18 or 19, **characterized in that** the first and second measuring electrode are at least virtually opposite each other so that a distance between the first and second measuring electrode is at least virtually minimal.

21. A milk meter according to claim 16, **characterized in that** the signal processing means are designed for carrying out, per measuring electrode assembly, a capacitance measurement on the milk.

22. A milk meter according to claim 8 or 9 and according to claim 21, **characterized in that** the measuring electrodes are arranged for application of an ECT (Electrical Capacitance Tomography)-technique, while the signal processing means are designed for determining said information from the measuring signals provided by the at least one measuring electrode assembly.

23. A milk meter according to any one of claims 15 - 22, **characterized in that** the signal processing means are designed for forming, from measuring signals provided by the measuring electrode assemblies, numerical values which represent a degree of filling of the interior of the tubular measuring section at the location of the at least one measuring electrode assembly.

24. A milk meter according to claims 14 and 23, **characterized in that** the signal processing means are designed for determining from the measuring signals coming from the at least two measuring electrode assemblies, with the aid of cross correlation techniques, the time τ the milk requires for travelling the distance between the electrode assemblies whereby preferably the signal processing means are further designed for determining, starting from the degree of filling and the time τ, the current volume or mass flow of the milk flowing through the measuring section, and through integration thereof in time the total volume flow of the milk.

## Patentansprüche

1. Milchmessgerät (100) zum Erhalten von Informationen über das Volumen und/oder die Masse von Milch, bereitgestellt von einer Melkmaschine beim Melken von Tieren, wobei das Milchmessgerät mindestens einen röhrenförmigen Messabschnitt (4) umfasst, durch den, bei Verwendung, die zu messende Milch fließt, wobei der röhrenförmige Messabschnitt mit mindestens einer Messelektrodenanordnung (8, 10) versehen ist, um pro Messelektrodenanordnung eine Impedanzmessung an Milch, anwesend in dem Messabschnitt, auszuführen, **dadurch gekennzeichnet, dass** der röhrenförmige Messabschnitt an seiner Innenseite an der Stelle der mindestens einen Messelektrodenanordnung einen länglichen, schlitzförmigen Querschnitt (9, 11) hat, mit mindestens zwei gegenüberliegenden langen Seiten (12, 14) und optional mit kurzen Seiten (16, 18), wobei jede lange Seite der zwei gegenüberliegenden langen Seiten mit mindestens einer Messelektrode der mindestens einen Messelektrodenanordnung versehen ist.

2. Milchmessgerät nach Anspruch 1, **dadurch gekennzeichnet, dass** ein Normal einer Ebene, in der der Querschnitt, umfassend die mindestens zwei gegenüberliegenden langen Seiten, liegt, einen Winkel anders als 90 Grad mit einer Fließrichtung der Milch durch die Ebene einschließt.

3. Milchmessgerät nach Anspruch 2, **dadurch gekennzeichnet, dass** der Winkel weniger als 45 Grad ist, bevorzugt weniger als 25 Grad und bevorzugter mindestens nahezu gleich Null Grad.

4. Milchmessgerät nach Anspruch 2 oder 3, **dadurch gekennzeichnet, dass** die Richtung des Normals und eine Richtung einer axialen Achse des röhrenförmigen Messabschnitts mindestens einander gleich sind.

5. Milchmessgerät nach einem der vorhergehenden Ansprüche, **dadurch gekennzeichnet, dass** die mindestens eine Messelektrodenanordnung von länglichem Design ist, wobei eine Längsrichtung der mindestens einen Messelektrodenanordnung in eine Längsrichtung der langen Seiten verläuft.

6. Milchmessgerät nach einem der vorhergehenden Ansprüche, **dadurch gekennzeichnet, dass** an mindestens einer langen Seite eine Messelektrode in einer solchen Weise bereitgestellt ist, dass diese Messelektrode über mindestens nahezu eine volle Länge der jeweiligen langen Seite verläuft.

7. Milchmessgerät nach Anspruch 6, **dadurch gekennzeichnet, dass** an jeder langen Seite eine Messelektrode bereitgestellt ist, die über mindestens nahezu eine volle Länge der jeweiligen langen Seite verläuft.

8. Milchmessgerät nach Anspruch 6 oder 7, **dadurch gekennzeichnet, dass** an mindestens einer langen Seite eine Vielzahl von Messelektroden so bereitgestellt ist, dass diese Messelektroden verteilt über mindestens nahezu eine volle Länge der jeweiligen langen Seite angeordnet sind.

9. Milchmessgerät nach Anspruch 8, **dadurch gekennzeichnet, dass** an jeder langen Seite eine Vielzahl von Messelektroden in einer solchen Weise angeordnet ist, dass pro langer Seite diese Messelektroden verteilt über mindestens nahezu eine volle Länge der jeweiligen langen Seite angeordnet sind.

10. Milchmessgerät nach einem der vorhergehenden Ansprüche, **dadurch gekennzeichnet, dass** stromaufwärts von dem Messabschnitt das Milchmessgerät mit einem Schwallbilder versehen ist.

11. Milchmessgerät nach Anspruch 10, **dadurch gekennzeichnet, dass** der Schwallbilder konzipiert ist, um Geschwindigkeitsabweichungen der Milch auszugleichen und Schwalle zu erzeugen.

12. Milchmessgerät nach einem der vorhergehenden Ansprüche, **dadurch gekennzeichnet, dass** der Querschnitt an der mindestens einen Messelektrodenanordnung rechteckig ist.

13. Milchmessgerät nach einem der vorhergehenden Ansprüche, **dadurch gekennzeichnet, dass** der Querschnitt an jeder Messelektrodenanordnung rechteckig ist.

14. Milchmessgerät nach einem der vorhergehenden Ansprüche, **dadurch gekennzeichnet, dass** der röhrenförmige Messabschnitt mit mindestens zwei, in Fließrichtung getrennten Messelektroden versehen ist, um pro Messelektrodenanordnung eine Impedanzmessung an Milch, anwesend in dem Messabschnitt, auszuführen.

15. Milchmessgerät nach einem der vorhergehenden Ansprüche, **dadurch gekennzeichnet, dass** das Milchmessgerät ferner mit Signalverarbeitungsmitteln versehen ist, um pro Messelektrodenanordnung eine Impedanzmessung an der Milch auszuführen.

16. Milchmessgerät nach einem der vorhergehenden Ansprüche, **dadurch gekennzeichnet, dass** das Milchmessgerät ferner mit Signalverarbeitungsmitteln versehen ist, um die Information von den Messsignalen, bereitgestellt von der mindestens einen Messelektrodenanordnung, zu bestimmen.

17. Milchmessgerät nach Anspruch 16, **dadurch gekennzeichnet, dass** die Signalverarbeitungsmittel konzipiert sind, um pro Messelektrodenanordnung eine Widerstandsmessung an der Milch auszuführen.

18. Milchmessgerät nach Anspruch 17, **dadurch gekennzeichnet, dass** das Milchmessgerät so konzipiert ist, dass, bei Verwendung, eine Widerstandsmessung zwischen mindestens einer ersten Messelektrode und mindestens einer zweiten Messelektrode einer Messelektrodenanordnung ausgeführt wird, wobei die mindestens eine erste Messelektrode an einer der langen Seiten eines schlitzförmigen Querschnitts bereitgestellt ist und die mindestens eine zweite Messelektrode an einer anderen der langen Seiten des schlitzförmigen Querschnitts bereitgestellt ist.

19. Milchmessgerät nach Anspruch 17 oder 18, **dadurch gekennzeichnet, dass** das Milchmessgerät so konzipiert ist, dass, bei Verwendung, eine Widerstandsmessung zwischen Messelektroden von Paaren von Messelektroden einer Messelektrodenanordnung ausgeführt wird, wobei jedes Paar eine erste Messelektrode und eine zweite Messelektrode umfasst, wobei die erste Messelektrode an einer der langen Seiten eines schlitzförmigen Querschnitts bereitgestellt ist und die zweite Messelektrode an einer anderen der langen Seiten des schlitzförmigen Querschnitts bereitgestellt ist.

20. Milchmessgerät nach Anspruch 18 oder 19, **dadurch gekennzeichnet, dass** die erste und zweite Messelektrode mindestens nahezu einander gegenüber sind, sodass ein Abstand zwischen der ersten und zweiten Messelektrode mindestens nahezu minimal ist.

21. Milchmessgerät nach Anspruch 16, **dadurch gekennzeichnet, dass** die Signalverarbeitungsmittel konzipiert sind, um pro Messelektrodenanordnung eine Kapazitanzmessung an der Milch auszuführen.

22. Milchmessgerät nach Anspruch 8 oder 9 und nach Anspruch 21, **dadurch gekennzeichnet, dass** die Messelektroden zur Anwendung einer ECT (engl. Electrical Capacitance Tomography)-Technik angeordnet sind, während die Signalverarbeitungsmittel konzipiert sind, um die Information von den Messsignalen, bereitgestellt von der mindestens einen Messelektrodenanordnung, zu bestimmen.

23. Milchmessgerät nach einem der Ansprüche 15-22, **dadurch gekennzeichnet, dass** die Signalverarbeitungsmittel konzipiert sind, um anhand von Messsignalen, bereitgestellt von den Messelektrodenanordnungen, numerische Werte zu bilden, die einen Füllgrad des Inneren des röhrenförmigen Messabschnitts an der Stelle der mindestens einen Messelektrodenanordnung darstellen.

24. Milchmessgerät nach den Ansprüchen 14 und 23, **dadurch gekennzeichnet, dass** die Signalverarbeitungsmittel konzipiert sind, um anhand der Messsignale, die von den mindestens zwei Messelektrodenanordnungen kommen, mithilfe von Kreuzkorrelationstechniken die Zeit τ zu bestimmen, die die Milch braucht, um den Abstand zwischen den Elektrodenanordnungen zurückzulegen, wobei bevorzugt die Signalverarbeitungsmittel ferner konzipiert sind, um, ausgehend von dem Füllgrad und der Zeit τ, den aktuellen Volumen- oder Massefluss der durch den Messabschnitt fließenden Milch und durch Integration davon in Zeit den gesamten Volumenfluss der Milch zu bestimmen.

## Revendications

1. Compteur à lait (100) destiné à obtenir des informations concernant le volume et/ou la masse de lait fournis par une machine à traire lors de la traite d'animaux, sachant que le compteur à lait comprend au moins une section de mesure tubulaire à travers laquelle, lors de l'utilisation, s'écoule le lait devant être mesuré, sachant que la section de mesure tubulaire est dotée d'au moins un ensemble d'électrodes de mesure (8, 10) aux fins de réaliser, par l'intermédiaire de l'ensemble d'électrodes de mesure, une mesure d'impédance sur le lait présent dans la section de mesure,
**caractérisé en ce que** la section de mesure tubulaire présente à l'intérieur, à l'emplacement de l'ensemble d'électrodes de mesure, au nombre d'au moins un, une section transversale en forme de fente allongée (9, 11) avec au moins deux grands côtés (12, 14) opposés et, de manière facultative, avec de petits côtés (16, 18), sachant que chaque grand côté de deux grands côtés opposés est doté d'au moins une électrode de mesure de l'ensemble d'électrodes de mesure, au nombre d'au moins un.

2. Compteur à lait selon la revendication 1, **caractérisé en ce qu'**une normale à un plan dans lequel se situe la section transversale comportant les grands côtés opposés, au nombre d'au moins deux, forme un angle différent de 90 degrés avec une direction d'écoulement du lait à travers le plan.

3. Compteur à lait selon la revendication 2, **caractérisé en ce que** ledit angle est inférieur à 45 degrés, de préférence inférieur à 25 degrés et est plus particulièrement de préférence au moins quasiment égal à zéro degrés.

4. Compteur à lait selon la revendication 2 ou 3, **caractérisé en ce que** la direction de la normale et une direction d'un axe axial de la section de mesure tubulaire sont au moins quasiment égales l'une à l'autre.

5. Compteur à lait selon l'une quelconque des revendications précédentes, **caractérisé en ce que** l'ensemble d'électrodes de mesure, au nombre d'au moins un, présente une conception allongée, où une direction longitudinale de l'ensemble d'électrodes de mesure, au nombre d'au moins un, s'étend dans une direction longitudinale des grands côtés.

6. Compteur à lait selon l'une quelconque des revendications précédentes, **caractérisé en ce que** sur au moins un grand côté, une électrode de mesure est prévue de manière telle que cette électrode de mesure s'étende sur au moins quasiment la longueur totale du grand côté respectif.

7. Compteur à lait selon la revendication 6, **caractérisé en ce que** sur chaque grand côté, il est prévu une électrode de mesure qui s'étend sur au moins quasiment la longueur totale du grand côté respectif.

8. Compteur à lait selon la revendication 6 ou 7, **caractérisé en ce que** sur au moins un grand côté, il est prévu une pluralité d'électrodes de mesure, de manière à ce que ces électrodes de mesure soient disposées en étant réparties sur au moins quasiment la longueur totale du grand côté respectif.

9. Compteur à lait selon la revendication 8, **caractérisé en ce que** sur chaque grand côté, une pluralité d'électrodes sont disposées de manière telle que par grand côté, ces électrodes de mesure soient disposées en étant réparties sur au moins quasiment la longueur totale du grand côté respectif.

10. Compteur à lait selon l'une quelconque des revendications précédentes, **caractérisé en ce que**, en amont de la section de mesure, le compteur à lait est doté d'un élément de formation de bouchons.

11. Compteur à lait selon la revendication 10, **caractérisé en ce que** l'élément de formation de bouchons est conçu pour égaliser des variations de vitesse du lait et pour produire des bouchons.

12. Compteur à lait selon l'une quelconque des revendications précédentes, **caractérisé en ce que** la section transversale à l'emplacement de l'ensemble d'électrodes de mesure, au nombre d'au moins un, est rectangulaire.

13. Compteur à lait selon l'une quelconque des revendications précédentes, **caractérisé en ce que** la section transversale à l'emplacement de chaque ensemble d'électrodes de mesure, est rectangulaire.

14. Compteur à lait selon l'une quelconque des revendications précédentes, **caractérisé en ce que** la section de mesure tubulaire est munie d'au moins deux ensembles d'électrodes de mesure séparés dans le sens de l'écoulement, aux fins de réaliser, par l'intermédiaire de l'ensemble d'électrodes de mesure, une mesure d'impédance sur le lait présent dans la section de mesure.

15. Compteur à lait selon l'une quelconque des revendications précédentes, **caractérisé en ce que** le compteur à lait est en outre pourvu de moyens de traitement de signaux, destinés à réaliser, par l'intermédiaire de l'ensemble d'électrodes de mesure, une mesure d'impédance sur le lait.

16. Compteur à lait selon l'une quelconque des revendications précédentes, **caractérisé en ce que** le compteur à lait est en outre pourvu de moyens de traitement de signaux, destinés à déterminer les informations précitées, à partir des signaux de mesure fournis par l'ensemble d'électrodes de mesure, au nombre d'au moins un.

17. Compteur à lait selon la revendication 16, **caractérisé en ce que** les moyens de traitement de signaux sont conçus pour réaliser, par l'intermédiaire de l'ensemble d'électrodes de mesure, une mesure de résistance sur le lait.

18. Compteur à lait selon la revendication 17, **caractérisé en ce que** le compteur à lait est conçu de manière telle que, lors de l'utilisation, une mesure de résistance est réalisée entre au moins une première électrode de mesure et au moins une deuxième électrode de mesure d'un ensemble d'électrodes de mesure, sachant que la première électrode de mesure, au nombre d'au moins une, est prévue sur l'un des grands côtés d'une section transversale en forme de fente, et la deuxième électrode de mesure, au nombre d'au moins une, est prévue sur un autre des grands côtés de la section transversale en forme de fente.

19. Compteur à lait selon la revendication 17 ou 18, **caractérisé en ce que** le compteur à lait est conçu de manière telle que, lors de l'utilisation, une mesure de résistance est réalisée entre des électrodes de mesure de paires d'électrodes de mesure d'un ensemble d'électrodes de mesure, sachant que chaque paire comporte une première électrode de mesure et une deuxième électrode de mesure, la première électrode de mesure étant prévue sur l'un des grands côtés d'une section transversale en forme de fente, et la deuxième électrode de mesure est prévue sur un autre des grands côtés de la section transversale en forme de fente.

20. Compteur à lait selon la revendication 18 ou 19, **caractérisé en ce que** les première et deuxième électrodes de mesure sont au moins quasiment en face l'une de l'autre, de sorte qu'une distance entre les première et deuxième électrodes de mesure est au moins quasiment minimale.

21. Compteur à lait selon la revendication 16, **caractérisé en ce que** les moyens de traitement de signaux sont conçus pour réaliser, par l'intermédiaire de l'ensemble d'électrodes de mesure, une mesure de capacité sur le lait.

22. Compteur à lait selon la revendication 8 ou 9 et selon la revendication 21, **caractérisé en ce que** les électrodes de mesure sont disposées en vue de l'application d'une technique ECT (Electrical Capacitance Tomography - tomographie par capacité électrique), tandis que les moyens de traitement de signaux sont conçus pour déterminer les informations précitées, à partir des signaux de mesure fournis par l'ensemble d'électrodes de mesure, au nombre d'au moins un.

23. Compteur à lait selon l'une quelconque des revendications 15 à 22, **caractérisé en ce que** les moyens de traitement de signaux sont conçus pour former, à partir de signaux de mesure fournis par les ensembles d'électrodes de mesure, des valeurs numériques qui représentent un degré de remplissage de l'intérieur de la section de mesure tubulaire, à l'emplacement de l'ensemble d'électrodes de mesure, au nombre d'au moins un.

24. Compteur à lait selon les revendications 14 et 23, **caractérisé en ce que** les moyens de traitement de signaux sont conçus pour déterminer, à partir des signaux de mesure provenant des ensembles d'électrodes de mesure, au nombre d'au moins deux, à l'aide de techniques de corrélation croisée, le temps τ nécessaire au lait pour parcourir la distance entre les ensembles d'électrodes, sachant que, de préférence, les moyens de traitement de signaux sont en outre conçus pour déterminer, en commençant par le degré de remplissage et le temps τ, le volume ou le débit massique momentané du lait s'écoulant à travers la section de mesure, et, par intégration de ceux-ci dans le temps, le débit-volume total du lait.
